# EUROPEAN PATENT SPECIFICATION

(11) **EP 3 637 743 B1**
(45) Date of publication and mention of the grant of the patent: **07.04.2021**
(21) Application number: 18823316.7
(22) Date of filing: 11.06.2018
(51) Int. Cl.: H04M 1/02, H04M 1/18, H01Q 1/24, H05K 5/04

(54) **BATTERY COVER PLATE, PREPARATION METHOD, SHELL COMPONENT, AND MOBILE TERMINAL**
BATTERIEABDECKPLATTE, HERSTELLUNGSVERFAHREN, SCHALENKOMPONENTE UND MOBILES ENDGERÄT
PLAQUE DE RECOUVREMENT DE BATTERIE, PROCÉDÉ DE PRÉPARATION, COMPOSANT DE COQUE ET TERMINAL MOBILE

(30) Priority: 29.06.2017 CN 201710515496; 29.06.2017 CN 201720789639 U
(43) Date of publication of application: 15.04.2020
(73) Proprietor: GUANGDONG OPPO MOBILE TELECOMMUNICATIONS CORP., LTD., Wusha, Chang'an Dongguan, Guangdong 523860 (CN)
(72) Inventor: GU, Guodong, Dongguan Guangdong 523860 (CN)
(74) Representative: Manitz Finsterwald Patent- und Rechtsanwaltspartnerschaft mbB
(86) International application number: PCT/CN2018/090629
(87) International publication number: WO 2019/001251

(56) References cited:
- CN-A- 104 917 859
- CN-A- 105 576 345
- CN-A- 107 222 598
- CN-U- 205 828 665
- CN-U- 206 340 662
- JP-A- 2001 177 285
- JP-A- 2006 115 088

## Description

### TECHNICAL FIELD

The present disclosure relates to the technology field of manufacturing of electronic devices, and more particularly to a housing, a preparation method, a housing assembly, and a terminal. The conventional housings for electronic devices are known from JP 2001177285 A, CN 205828665 U, CN105576345 A and CN 105960131 A.

### BACKGROUND

At present, more and more battery covers/housings of mobile terminals are prepared by aluminum alloy. The battery covers/housings made of metal such as aluminum alloy can not only provide a metallic texture appearance for mobile phones, but also have better heat dissipation functions and wear resistance compared with plastic covers. With the popularization of metal housings, there are also integral covers integrating side frames and a battery back cover.

However, current metal battery covers/housings and methods for their preparation still need to be improved.

### SUMMARY

In view of this, the present invention is defined by a housing according to claim 1. Preferred embodiments thereof are laid down in the dependent claims 2-9.

In yet another aspect, the present invention provides a terminal according to claim 13. The terminal includes the housing assembly described above.

In still another aspect, the present invention is defined by a method for preparing the housing according to claim 10. Preferred embodiments thereof are laid down in the dependent claims 11 and 12.

The housing has at least one of the following advantages: a simple structure, a low cost of preparation, and the metal dome can be fixed by a vertically arranged screw, thereby avoiding the use of a horizontally arranged fixing screw with high process requirements.

### BRIEF DESCRIPTION OF THE DRAWINGS

FIG. 1 is a structural diagram of a housing according to an implementation of the present disclosure.
FIG. 2 is a partial structural diagram of a housing according to an implementation of the present disclosure.
FIG. 3 is a structural diagram of a housing according to an implementation of the present disclosure.
FIG. 4 is a structural diagram of a housing assembly according to an implementation of the present disclosure.
FIG. 5 is a flow chart of a method for preparing a housing according to an implementation of the present disclosure.
FIG. 6 is a flow chart for preparing a housing according to an implementation of the present disclosure.
FIG. 7 is a partial flow chart for preparing of a housing according to an implementation of the present disclosure.
FIG. 8 shows a structural diagram of a terminal according to an implementation of the present disclosure.

### DESCRIPTION OF REFERENCE SIGNS

10: housing; 101: preform; 100: base body; 200: side frame portion; 300: fixing portion; 301: through hole; 320: fixing element; 321: screw; 322: metal dome; 400: camera hole; 500: headphone plug; 600: charging port; 700: main board; 1000: housing assembly; 1100: terminal.

### DETAILED DESCRIPTION

Implementations of the present disclosure are described in detail below, and examples of the implementations are illustrated in the drawings in which the same or similar reference numerals are used to refer to the same or similar elements or elements having the same or similar functions. The implementations described below with reference to the accompanying drawings are merely illustrative and are used to explain the present disclosure only, rather than being construed as limiting the present disclosure.

It should be noted that features and effects described in various aspects of the present disclosure may be applied to each other, and are not described herein again.

In an implementation, the present disclosure provides a housing. The housing includes a base body, a side frame portion vertically extending from an edge of the base body, and a fixing portion parallel to and facing the base body, the fixing portion extending from one side of the side frame portion which is away from the base body. The base body, the side frame portion, and the fixing portion are made of metal.

In another implementation, the present disclosure further provides a housing assembly. The housing assembly includes the housing described above and a metal dome. The metal dome is fixed to the fixing portion of the housing by a fixing element, where the fixing element penetrates the fixing portion and is arranged perpendicular to the base body of the housing.

In yet another implementation, the present disclosure further provides a terminal. The terminal includes the housing assembly described above.

In still another implementation, the present disclosure further provides a method for preparing the housing described above. The method includes: performing a cutting process to a plate to form a preform; performing a stamping process to the preform, to form the side frame portion perpendicular to the base body; and performing a flanging and extruding process to a portion of the edge of the side frame portion, to form the fixing portion parallel to the base body.

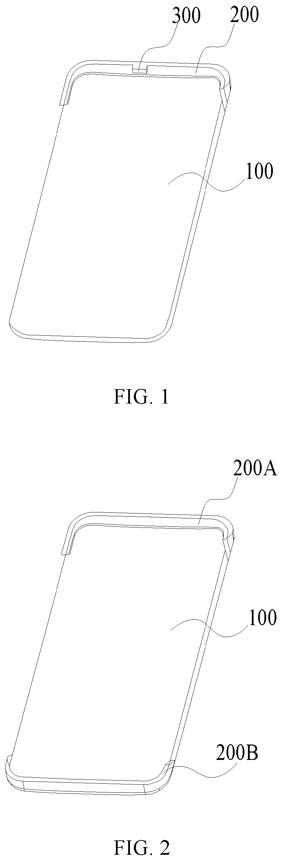

Specifically, referring to FIG. 1, the housing 10 includes a base body 100, a side frame portion 200, and a fixing portion 300. According to an implementation of the present disclosure, the side frame portion 200 vertically extends from an edge of the base body 100. According to an implementation of the present disclosure, the fixing portion 300 is parallel to and faces the base body 100, and the fixing portion 300 extends from one side of the side frame portion 200 which is away from the base body 100. Thus, the fixing portion 300 can be used to fix other parts that are attached to the housing, for example, a metal dome for connecting an antenna element and a main board, so that stable fixation between the antenna element and the main board can be achieved. The housing has at least one of the following advantages: a simple structure, a low cost of preparation, and the metal dome can be fixed by a vertically arranged screw, thereby avoiding the use of a horizontally arranged fixing screw with high process requirements.

It should be noted that in the present disclosure, a vertical direction refers to a direction perpendicular to a main surface of the base body 100 that usually faces a user when in use. A horizontal direction refers to a direction parallel to the direction in which the main surface of the base body 100 is in.

The present disclosure is made by inventors based on the following discoveries. Current metal housings usually suffer from problems such as degradation or even failure of the antenna performance resulted from falling of the housings. After in-depth researches and a large number of experiments, the inventors have found that the main reason for these problems is that in order to realize a communication function, an antenna is usually provided on the current housing. The antenna is coupled to the main board of the terminal such as a mobile phone through structures such as the metal dome. However, since it is difficult to achieve reliable fixation between the metal dome and the metal cover, when the terminal falls, an unstable connection is likely to occur, resulting in contact impedance change or even disconnection between the metal dome and the metal cover, thereby causing the antenna to drift, weaken or fail.

According to some examples of the present disclosure, the base body 100, the side frame portion 200, and the fixing portion 300 are made of metal. The housing employs the base body 100, the side frame portion 200, and the fixing portion 300 which are made of metal, can not only provide a metallic texture appearance for the mobile phone, but also has better heat dissipation function and wear resistance compared with a plastic housing. The specific types of metal for making the base body 100, the side frame portion 200, and the fixing portion 300 are not particularly limited, and those skilled in the art can choose according to actual needs. For example, it may be an aluminum alloy.

According to some examples of the present disclosure, a surface of the base body 100 includes at least one of a flat surface and an arc surface. That is, the housing can be either a flat housing or a cover having a certain curvature on the surface, that is, a 3D housing. Alternatively, some areas of the surface of the base body 100 may be flat surfaces, and other areas may be arc surfaces. For example, the central area of the base body 100 may be a flat surface, and a peripheral area may be a downward curved arc surface.

As described above, the housing made of metal material needs to be provided with an antenna and connect the antenna to the main board, to realize a radiation signal function of the antenna. However, because of unstable fixation of the metal dome that connects the antenna to the main board, problems such as antenna signal attenuation and even antenna failure often occur when the device such as the mobile phone drops. Although these problems can be solved by fixing the metal dome to the housing by using a fixing element such as a screw. However, since a thinner thickness of the housing is usually required in the terminal, if it is necessary to provide a fixing element such as a screw on the housing, the common way is to drill a hole in the side frame of the housing along a direction parallel to the main body of the housing, and then provides a screw in the hole to fix the metal dome. Drilling a hole along a direction parallel to the main body of the housing (ie, a screen surface of the mobile phone) is difficult in the process. Therefore, although this design can achieve stable fixation of the metal dome, time-consuming and labor-intensive process seriously affects the production efficiency of the housing, and the production cost is also greatly increased.

The housing according to the implementation of the present disclosure includes the fixing portion 300 parallel to the base body 100. Thus, the fixation of the metal dome can be achieved by drilling holes and inserting screws in the fixing portion 300 along a direction perpendicular to the base body 100. It can be understood by those skilled in the art that the fixing portion 300 can not only be used for fixing the metal dome, but also for fixing other parts, such as components that need to form a stable fixation with the housing. Therefore, the operation of arranging the screws in the horizontal direction (parallel to the plane where the base body 100 is located) with high process requirements can be avoided, so that the use performance of the terminal using the housing can be improved on the premise of ensuring the production efficiency of the housing and saving the production cost.

Specifically, referring to FIG. 2, the housing 10 may further include a plurality of side frame portions 200. According to the implementation of the present disclosure, the plurality of side frame portions 200 are arranged around the base body 100. That is, the plurality of side frame portions 200 vertically extending from the edges of the base body 100. Thus, the plurality of side frame portions 200 can serve as partial side frames of the terminal such as a mobile phone, and the plurality of side frame portions 200 and the base body 100 can act as an integrated overall cover. According to the implementation of the present disclosure, the number of the side frame portions 200 is not particularly limited, and those skilled in the art can choose according to actual needs. For example, according to an implementation of the present disclosure, the plurality of side frame portions 200 may be composed of a side frame portion 200A and a side frame portion 200B. More specifically, the side frame portion 200A and the side frame portion 200B may be symmetrically arranged with respect to the base body 100.

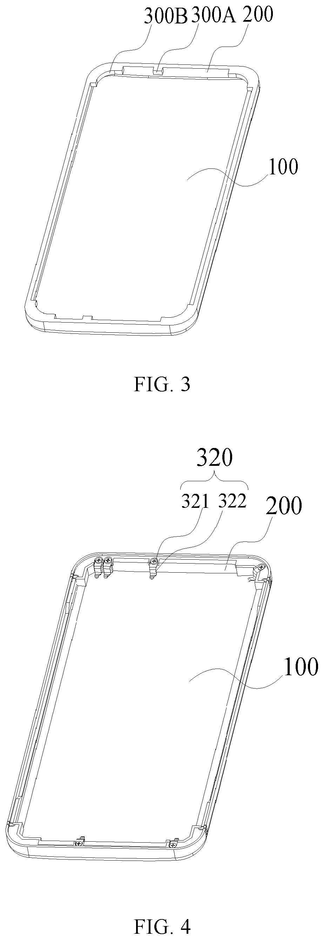

According to an implementation of the present disclosure, referring to FIG. 3, the specific shape of a plate for forming the base body 100 is not particularly limited. For example, the base body 100 may be formed by a quadrangular plate having rounded corners. Thus, the appearance effect of the housing formed by the base body 100 can be further improved. According to some examples of the present disclosure, each of the four edges of the base body 100 may be provided with a side frame portion 200, and the side frame portions 200 are symmetrically arranged around the base body 100. According to an example of the present disclosure, adjacent side frame portions 200 are connected to each other. That is, the four side frame portions 200 connected to each other, and form a bowl-like structure with the base body 100. According to an implementation of the present disclosure, the housing may have a plurality of fixing portions 300 (such as 300A, 300B in FIG. 3). According to the implementation of the present disclosure, the specific number of the fixing portion 300 is not particularly limited, and those skilled in the art can select according to actual needs. The positions at which the plurality of fixing portions 300 are arranged are also not particularly limited, and those skilled in the art can design the positions of the fixed parts (such as metal shrapnel) as needed. For example, according to an implementation of the present disclosure, the fixing portions 300 may be arranged at positions (such as the fixing portion 300B) corresponding to the corners of the base body 100 (or the side frame portions 200), or in the middle (such as the fixing portion 300A) of the side frame portions 200.

According to an implementation of the present disclosure, the base body 100, the side frame portion 200, and the fixing portion 300 are integrally formed. In this way, the base body 100, the side frame portion 200, and the fixing portion 300 can be formed by using a metal plate. Thus, on the one hand, the time for assembling the above components can be saved. On the other hand, when the base body 100, the side frame portion 200, and the fixing portion 300 are made of different materials, problems such as corrosion, connection failure, and the like occur at the joint can be avoided, and the service life of the housing can be prolonged.

According to the implementation of the present disclosure, referring to FIG. 4, the fixing portion 300 is provided with a through hole 301 for mounting a fixing element 320, and the through hole penetrates the fixing portion along a direction perpendicular to the base body 100, so that the fixing element 320 can be fixed to the fixing portion 300 in a direction perpendicular to the base body 100. According to the implementation of the present disclosure, the specific types of the fixing element 320 fixed to the fixing portion 300 are not particularly limited. For example, according to a specific implementation of the present disclosure, the metal dome 322 may be vertically fixed to the fixing portion 300 by using a screw 321, where the metal dome 322 may be used to connect the main board and the antenna element. Thus, the metal dome 322 can be fixed by the vertically arranged screw 321, to avoid the use of a horizontally arranged fixing screw with high process requirements. Moreover, stable fixation can be achieved by fixing the metal dome 322 to the fixing portion 300.

In general, the housing has at least one of the following advantages: a simple structure, a low cost of preparation, and the metal dome can be fixed by a vertically arranged screw, thereby avoiding the use of a horizontally arranged fixing screw with high process requirements.

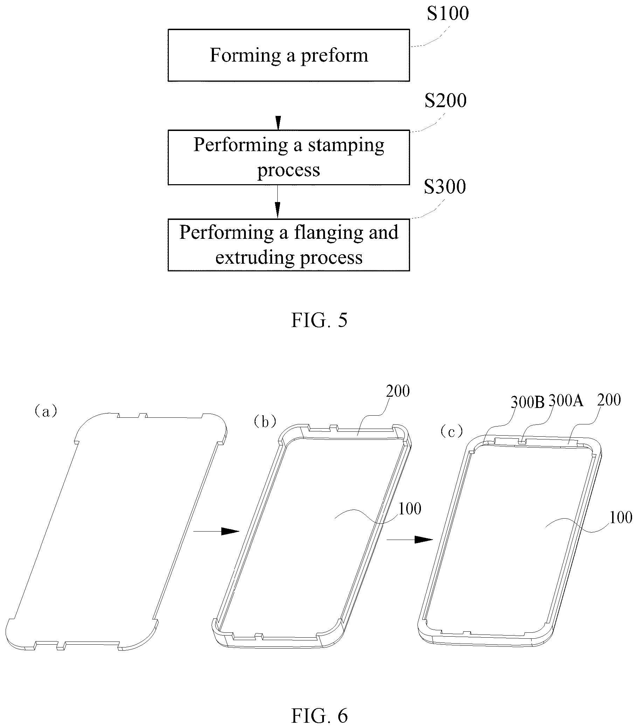

In another aspect of the present disclosure, with reference to FIG. 5, the present disclosure provides a method for preparing the housing described above. According to an implementation of the present disclosure, the method comprises the following operations.

At block 501, a preform 101 is formed.

According to an implementation of the present disclosure, in this operation, a cutting process is performed on a plate to form the preform 101. According to an implementation of the present disclosure, the preform may include a body for forming the base body, and an edge for forming the side frame portion and the fixing portion. According to an implementation of the present disclosure, the plate is a metal plate. According to the implementation of the present disclosure, the specific manner of the cutting process is not particularly limited as long as it meets the requirements of the cutting process. For example, according to an implementation of the present disclosure, the cutting process may be a CNC machine tool cutting process. Thus, the use performance of the housing prepared by the method can be further improved.

According to the specific implementation of the present disclosure, the specific shape of the preform formed by performing the cutting process on the plate is not particularly limited. For example, the preform may have a shape illustrated in a portion (a) of FIG. 6, where the edges of the preform may be used for forming the side frame portion and the fixing portion.

At block 502, a stamping process is performed.

According to an implementation of the present disclosure, in this operation, the stamping process is performed on the preform, to form the side frame portion perpendicular to the base body using the edges of the preform. According to the implementation of the present disclosure, the specific equipment for performing the stamping process is not particularly limited as long as it meets the requirements of the stamping process. For example, it can be selected according to a size, a shape, and precision of the above-described preform.

According to a specific implementation of the present disclosure, the structure formed by performing the stamping process on the preform may be as illustrated in a portion (b) of FIG. 6. That is, the side frame portion 200 is vertically arranged on the edge of the base body 100, and around the base body 100. It should be noted that the side frame portion 200 formed has a reserved portion to form the fixing portion 300 in a subsequent process.

At block 503, a flanging and extruding process is performed.

According to the implementation of the present disclosure, in this operation, the flanging and extruding process is performed on a portion for forming the fixing portion in the edge, to form the fixing portion parallel to the base body. According to the implementation of the present disclosure, the specific manner of the flanging and extruding process is not particularly limited as long as it meets the requirements of the flanging and extruding process. Thus, the housing described above can be easily obtained. The method has at least one of the advantages of saving raw material cost, reducing cost, shortening process and the like.

According to a specific implementation of the present disclosure, the structure formed by the flanging and extruding process is as illustrated in a portion (c) of FIG. 6. The base body 100, the side frame portion 200, and the fixing portion 300 are integrally formed, and each of four edges of the base body 100 is provided with a side frame portion 200. According to the implementation of the present disclosure, the adjacent side frame portions 200 are connected to each other, and the plurality of fixing portions 300 are respectively arranged at positions corresponding to the corners, and in the middle of the side frame portions 200.

The inventors have found that by reserving material for forming the fixing portion 300 in the preform and forming the fixing portion 300 by performing the flanging and extruding process, the previously described fixing portion 300 parallel to the base body 100 can be easily obtained, and the method according to the implementation of the present disclosure has the advantage of saving more metal plate than directly adopting the CNC machine tool cutting to form the housing described above. If the fixing portion 300 which is connected with the side frame portion 200 is cut by CNC technology, a thick plate (the thickness is about the sum of the thickness of the base body 100 and the height of the side frame portion 200) needs to be hollowed out. On the one hand, it causes large-area CNC cutting, which takes time. On the other hand, the metal plate in the hollowed out part is wasted, which indirectly causes an increase in production cost. However, if the flanging and extruding process is adopted, on the one hand, the large-area CNC process can be avoided, and times can be saved. On the other hand, when the housing is prepared by the above method, the thickness of the plate used only needs to be equal to the thickness of the base body 100. Thus, the production cost can be further saved.

According to an implementation of the present disclosure, in order to further improve the performance of the housing prepared by the method, the method further includes the following operation.

A fixing element is arranged.

According to an implementation of the present disclosure, in this operation, a fixing element penetrating the fixing portion and arranged perpendicular to the base body is provided at the fixing portion. Thus, the metal dome and the housing can be fixed by the fixing element such as a screw arranged perpendicular to the base body, thereby avoiding the use of a horizontally arranged fixing element which is highly demanding for the process.

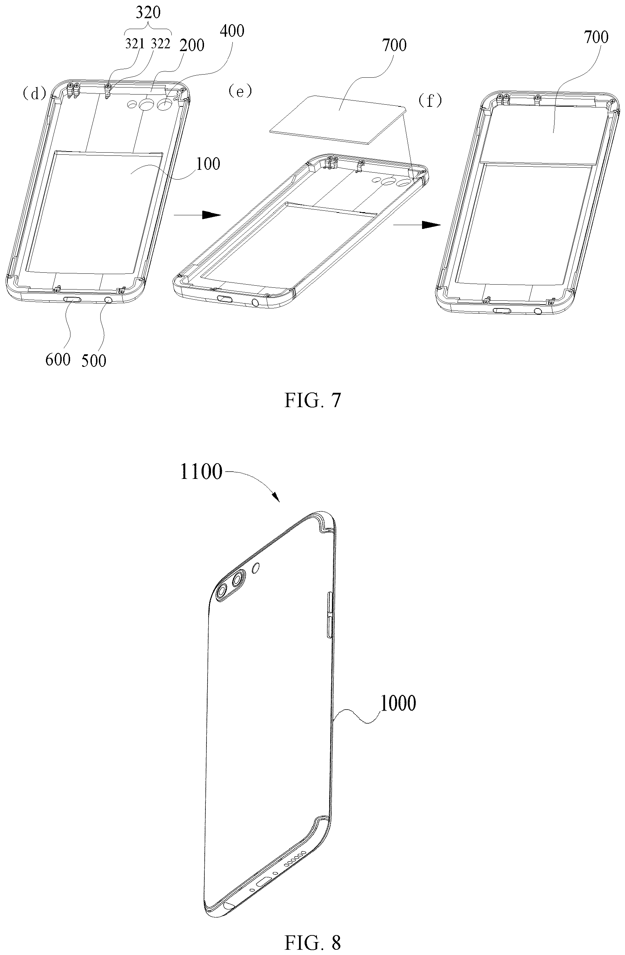

According to the specific implementation of the present disclosure, referring to a portion (d) of FIG. 7, the fixing portion 300 is provided with a through hole 301 for arranging the fixing element 320, so that the fixing element 320 can be fixed to the fixing portion 300 in a direction perpendicular to the base body 100. According to the implementation of the present disclosure, the specific manner of forming the through hole on the fixing portion 300 is not particularly limited, as long as it meets the requirement for forming the through hole. For example, according to a specific implementation of the present disclosure, it may be formed by drilling holes. According to a specific implementation of the present disclosure, the fixing portion 300 formed by the flanging and extruding process is parallel to the base body 100. Thus, the fixing portion 300 may be punched in a direction perpendicular to the base body 100 to form the through hole for mounting the fixing element 320. In the subsequent process, the metal dome may be fixed by a vertically arranged screw, thereby avoiding the use of a horizontally arranged fixed screw with high process requirements.

According to an implementation of the present disclosure, after the operation of arranging the fixing element is completed, the method may further include the following operation.

Referring to FIG. 7, first, the metal dome 322 can be vertically fixed on the fixing portion 300 by using the screw 321 to achieve stable fixation, and the metal dome 322 and the base body do not move with each other. According to an implementation of the present disclosure, the method may further include a process such as drilling and tapping performed on the base body 100, to obtain structures such as a camera hole 400, a headphone plug 500, a charging port 600, and the like. Finally, the main board 700 is assembled into the base body 100, and the main board 700 is stably fixed to the metal dome 322, then a stable connection is realized in the entire connecting circuit. Thereby, the metal dome 322 can be fixed by the vertically arranged screw 321, to avoid the use of a horizontally arranged fixed screw with high process requirements. Moreover, the metal dome 322 for connecting the antenna element and the main board can be fixed by the fixing portion 300, so that stable fixation can be achieved. According to a specific implementation of the present disclosure, the structure after the main board 700 is assembled on the housing is as shown in a portion (f) of FIG. 7.

In yet another aspect of the present disclosure, the present disclosure provides a housing assembly. According to an implementation of the present disclosure, referring to FIG. 4, the housing assembly includes the housing 10 and the metal dome 322 described above. According to the implementation of the present disclosure, the metal dome 322 is fixed to the fixing portion 300 of the housing by the screw 321, and the screw 321 penetrates the fixing portion 300 and is arranged perpendicular to the base body 100 of the housing. Thus, a stable fixation between the metal dome 322 and the housing can be achieved, thereby alleviating the problem that the performance of the antenna declines or fails due to the drop of the terminal employing the housing assembly.

In still another aspect of the present disclosure, with reference to FIG. 8, the present disclosure provides a terminal 1100. According to an implementation of the present disclosure, the terminal 1100 includes the housing assembly 1000 previously described. Thus, all of the features and advantages of the housing assembly 1000 previously described may be present in the terminal 1100 and will not be described herein. In general, the terminal 1100 can alleviate the problem of degradation or failure of antenna performance due to dropping. It should be particularly noted that, in the housing assembly 1000 described above, since the fixing element is arranged inside the housing assembly, the outer surface of the terminal 1100 has no visible fixing screws. Thereby, the overall consistency of the appearance of the terminal 1100 can be further improved.

The present disclosure is described in the above specific implementations. It is to be understood that the above specific implementations are only for the purpose of illustration, and are not intended to limit the scope of the application in any way. Alternatively, unless otherwise stated, methods which do not specifically describe the conditions or operations are conventional methods, and the reagents and materials used are commercially available.

The preferred implementations of the present disclosure have been described in detail above.

In the description of the present disclosure, it is to be understood that the orientations or positions relationship indicated by the terms "up", "down", "front", "back", "top", "bottom", "inside", "outside", and the like, is based on the orientation or positional relationship illustrated in the drawings, and is merely for the convenience of the descriptions and simplifying the descriptions, but is not intended to indicate or imply that the device or component referred to must have a specific orientation, and is constructed and operated in a specific orientation. It is not to be construed as limiting the application.

## Claims

1. A housing (10) comprising:
a base body (100);
a side frame portion (200) vertically extending from an edge of the base body; and
a fixing portion (300) parallel to and facing the base body, the fixing portion extending from one side of the side frame portion which is away from the base body;
wherein the base body, the side frame portion, and the fixing portion are made of metal and the housing is provided with an antenna;
wherein the fixing portion is provided with a through hole (301) which penetrates the fixing portion along a direction perpendicular to the base body;
the through hole is configured for mounting a fixing element (320), to enable the fixing element to be fixed to the fixing portion in a direction perpendicular to the base body;
the housing further comprises a metal dome (322) fixed to the fixing portion by the fixing element and connecting the antenna and a main board.

2. The housing of claim 1, wherein a surface of the base body comprises at least one of a flat surface and an arc surface.

3. The housing of claim 1, comprising a plurality of the side frame portions arranged around the base body.

4. The housing of claim 3, the housing comprising two of the side frame portions which are symmetrically arranged with respect to the base body; or
the housing comprising four of the side frame portions which are symmetrically arranged around the base body.

5. The housing of claim 1, wherein the base body, the side frame portion, and the fixing portion are integrally formed.

6. The housing of claim 1, wherein the side frame portion is provided with a plurality of the fixing portions.

7. The housing of claim 1, wherein the base body is a quadrilateral plate having rounded corners.

8. The housing of claim 7, wherein the fixing portion is arranged at a position corresponding to the corner or in the middle of the side frame portion.

9. The housing of claim 1, comprising:
the base body formed by a quadrangular plate with rounded corners, each of four edges of the base body being provided with the side frame portion, and the adjacent side frame portions being connected to each other;
a plurality of the fixing portions arranged at positions corresponding to the corners, or in the middle of the side frame portions;
wherein the base body, the side frame portion, and the fixing portion are integrally formed.

10. A method for preparing the housing of any one of claims 1 to 9, the method comprising:
performing a cutting process on a plate to form a preform (101) (501);
performing a stamping process on the preform (502), to form the side frame portion perpendicular to the base body; and
performing a flanging and extruding process to a portion of an edge of the side frame portion (503), to form the fixing portion parallel to the base body.

11. The method of claim 10, wherein the preform comprises a body for forming a base body and the edge for forming the side frame portion and the fixing portion, the method comprising:
performing a mechanical energy stamping process on the edge of the preform, to form the side frame portion with the edge; and
performing the flanging and extruding process on a portion for forming the fixing portion in the edge, to form the fixing portion.

12. The method of claim 11, further comprising:
providing, at the fixing portion, a fixing element penetrating the fixing portion and arranged perpendicular to the base body.

13. A terminal comprising the housing of any one of claims 1 to 9.

## Patentansprüche

1. Gehäuse (10), umfassend:
einen Basiskörper (100),
einen Seitenrahmenabschnitt (200), der sich vertikal von einem Rand des Basiskörpers erstreckt, und einen Befestigungsabschnitt (300), der parallel zu dem Basiskörper verläuft und diesem zugewandt ist, wobei sich der Befestigungsabschnitt von einer Seite des Seitenrahmenabschnitts erstreckt, die von dem Basiskörper weg liegt,
wobei der Basiskörper, der Seitenrahmenabschnitt und der Befestigungsabschnitt aus Metall hergestellt sind und das Gehäuse mit einer Antenne versehen ist,
wobei der Befestigungsabschnitt mit einem Durchgangsloch (301) versehen ist, das entlang einer senkrecht zu dem Basiskörper verlaufenden Richtung durch den Befestigungsabschnitt geht,
das Durchgangsloch zur Montage eines Befestigungselements (320) daran ausgestaltet ist, damit das Befestigungselement in einer senkrecht zu dem Basiskörper verlaufenden Richtung an dem Befestigungsabschnitt befestigt werden kann,
das Gehäuse ferner eine Metallkuppel (322) umfasst, die mittels des Befestigungselements an dem Befestigungsabschnitt befestigt ist und die Antenne und eine Hauptplatine verbindet.

2. Gehäuse nach Anspruch 1, wobei eine Fläche des Basiskörpers eine flache Fläche und/oder eine gebogene Fläche umfasst.

3. Gehäuse nach Anspruch 1, umfassend eine Vielzahl von Seitenrahmenabschnitten, die um den Basiskörper herum angeordnet sind.

4. Gehäuse nach Anspruch 3, wobei das Gehäuse zwei der Seitenrahmenabschnitte umfasst, die bezüglich des Basiskörpers symmetrisch angeordnet sind, oder
das Gehäuse vier der Seitenrahmenabschnitte umfasst, die bezüglich des Basiskörpers symmetrisch angeordnet sind.

5. Gehäuse nach Anspruch 1, wobei der Basiskörper, der Seitenrahmenabschnitt und der Befestigungsabschnitt integral ausgebildet sind.

6. Gehäuse nach Anspruch 1, wobei der Seitenrahmenabschnitt mit einer Vielzahl der Befestigungsabschnitte versehen ist.

7. Gehäuse nach Anspruch 1, wobei der Basiskörper eine vierseitige Platte mit abgerundeten Ecken ist.

8. Gehäuse nach Anspruch 7, wobei der Befestigungsabschnitt an einer Position angeordnet ist, die der Ecke oder der Mitte des Seitenrahmenabschnitts entspricht.

9. Gehäuse nach Anspruch 1, umfassend:
den Basiskörper, der aus einer viereckigen Platte mit abgerundeten Ecken gebildet ist, wobei jeder der vier Ränder des Basiskörpers mit dem Seitenrahmenabschnitt versehen ist und die benachbarten Seitenrahmenabschnitte miteinander verbunden sind,
eine Vielzahl der Befestigungsabschnitte, die in Positionen, die den Ecken entsprechen, oder in der Mitte der Seitenrahmenabschnitte angeordnet sind,
wobei der Basiskörper, der Seitenrahmenabschnitt und der Befestigungsabschnitt integral ausgebildet sind.

10. Verfahren zum Herstellen des Gehäuses nach einem der Ansprüche 1 bis 9, wobei das Verfahren Folgendes umfasst:
Durchführen eines Schneidvorgangs an einer Platte zum Bilden einer Vorform (101) (501),
Durchführen eines Stanzvorgangs an der Vorform (502) zum Bilden des Seitenrahmenabschnitts senkrecht zu dem Basiskörper und
Durchführen eines Flansch- und Extrudiervorgangs an einem Abschnitt eines Rands des Seitenrahmenabschnitts (503) zum Bilden des Befestigungsabschnitts parallel zu dem Basiskörper.

11. Verfahren nach Anspruch 10, wobei die Vorform einen Körper zum Bilden des Basiskörpers und den Rand zum Formen des Seitenrahmenabschnitts und des Befestigungsabschnitts umfasst, wobei das Verfahren Folgendes umfasst:
Durchführen eines Stanzvorgangs mit mechanischer Energie an dem Rand der Vorform zum Bilden des Seitenrahmenabschnitts mit dem Rand und
Durchführen des Flansch- und Extrudiervorgangs an einem Abschnitt zum Bilden des Befestigungsabschnitts in dem Rand zum Bilden des Befestigungsabschnitts.

12. Verfahren nach Anspruch 11, ferner umfassend:
Bereitstellen eines Befestigungselements an dem Befestigungsabschnitt, das durch den Befestigungsabschnitt geht und senkrecht zu dem Basiskörper angeordnet ist.

13. Endgerät, umfassend das Gehäuse nach einem der Ansprüche 1 bis 9.

## Revendications

1. Boîtier (10) comprenant :
un corps de base (100) ;
une portion de cadre latérale (200) s'étendant verticalement depuis un bord du corps de base ; et une portion de fixation (300) parallèle au corps de base et en regard de celui-ci, la portion de fixation s'étendant depuis un côté de la portion de cadre latérale qui est éloigné du corps de base ;
le corps de base, la portion de cadre latérale et la portion de fixation étant fabriqués en métal et le boîtier étant pourvu d'une antenne ;
la portion de fixation étant pourvue d'un trou traversant (301) qui pénètre à travers la portion de fixation le long d'une direction perpendiculaire au corps de base ;
le trou traversant étant configuré pour le montage d'un élément de fixation (320) pour permettre à l'élément de fixation d'être fixé à la portion de fixation dans une direction perpendiculaire au corps de base ;
le boîtier comprenant en outre un dôme métallique (322) fixé à la portion de fixation par l'élément de fixation et reliant l'antenne et une carte mère.

2. Boîtier selon la revendication 1, dans lequel une surface du corps de base comprend au moins une surface plate et/ou une surface arquée.

3. Boîtier selon la revendication 1, comprenant une pluralité de portions de cadre latérales disposées autour du corps de base.

4. Boîtier selon la revendication 3, le boîtier comprenant deux des portions de cadre latérales qui sont agencées symétriquement par rapport au corps de base ; ou
le boîtier comprenant quatre des portions de cadre latérales qui sont agencées symétriquement autour du corps de base.

5. Boîtier selon la revendication 1, dans lequel le corps de base, la portion de cadre latérale et la portion de fixation sont formés intégralement.

6. Boîtier selon la revendication 1, dans lequel la portion de cadre latérale est pourvue d'une pluralité des portions de fixation.

7. Boîtier selon la revendication 1, dans lequel le corps de base est une plaque quadrilatérale ayant des coins arrondis.

8. Boîtier selon la revendication 7, dans lequel la portion de fixation est agencée à une position correspondant au coin ou au milieu de la portion de cadre latérale.

9. Boîtier selon la revendication 1, comprenant :
le corps de base formé par une plaque quadrangulaire avec des coins arrondis, chacun de quatre bords du corps de base étant pourvu de la portion de cadre latérale et les portions de cadre latérales adjacentes étant connectées les unes aux autres ;
une pluralité de portions de fixation agencées à des positions correspondant aux coins ou au milieu des portions de cadre latérales ;
le corps de base, la portion de cadre latérale et la portion de fixation étant formés intégralement.

10. Procédé de préparation du boîtier selon l'une quelconque des revendications 1 à 9, le procédé comprenant :
la réalisation d'une opération de coupe sur une plaque pour former une préforme (101) (501) ;
la réalisation d'une opération d'estampage sur la préforme (502) pour former la portion de cadre latérale perpendiculaire au corps de base ; et
la réalisation d'une opération de formation de bride et d'extrusion sur une portion d'un bord de la portion de cadre latérale (503) pour former la portion de fixation parallèle au corps de base.

11. Procédé selon la revendication 10, dans lequel la préforme comprend un corps pour former un corps de base et le bord pour former la portion de cadre latérale et la portion de fixation, le procédé comprenant :
la réalisation d'une opération d'emboutissage par énergie mécanique sur le bord de la préforme, pour former la portion de cadre latérale avec le bord ; et
la réalisation de l'opération de formation de bride et d'extrusion sur une portion pour former la portion de fixation dans le bord, pour former la portion de fixation.

12. Procédé selon la revendication 11, comprenant en outre :
la fourniture d'un élément de fixation au niveau de la portion de fixation, lequel pénètre à travers la portion de fixation et est agencé perpendiculairement au corps de base.

13. Terminal comprenant le boîtier selon l'une quelconque des revendications 1 à 9.
